# EUROPEAN PATENT APPLICATION

(11) **EP 1 587 071 A1**
(43) Date of publication of application: **19.10.2005**
(21) Application number: 04009090.4
(22) Date of filing: 16.04.2004
(51) Int. Cl.: G11B 7/0045, G11B 20/14

(54) **Write pulse generation for recording on optical media**

(71) Applicant: DEUTSCHE THOMSON-BRANDT GMBH, 78048 Villingen-Schwenningen (DE)
(72) Inventor: Mahr, Peter, 79669 - Zell im Wiesental (DE); Huonker, Michael, 72348 - Rosenfeld-Isingen (DE); Schone, Wiebke, 78052 - Villingen-Schwenningen (DE)
(74) Representative: Thies, Stephan

(57) **Abstract**

The present invention relates to a method and a circuit for write pulse generation for recording on optical media, and to an apparatus for writing to optical recording media using such method.

It is an object of the invention to propose a reliable and accurate method for write pulse generation with low hardware complexity.

According to the invention, this object is achieved by a method for write pulse generation on the basis of a bit clock, including the steps of:
- dividing the bit clock by a factor *n*,
- multiplying the divided bit clock by a factor *n+x* or *n-x* with a phase-locked loop (2, 3) to obtain signal edges which are time-shifted relative to the bit clock,
- selecting a desired time-shifted signal edge, and
- multiplying the selected time-shifted signal edge by the factor n with a further phase-locked loop (5, 6) to obtain a time-shifted bit clock.

## Description

The present invention relates to a method and a circuit for write pulse generation for recording on optical media, and to an apparatus for writing to optical recording media using such method.

The generation of write pulses is an important aspect of the write strategy for recording on optical media. The write pulses need to be modified within a recording session, as they have to be divided into leading, middle and end pulses. Furthermore, depending on different factors such as the manufacturer of the optical medium, the length of these three pulses needs to be variable. According to the prior art the variation of the length of the write pulses is realized by a very high frequency bit clock, whose unique pulses are accumulated over *n* pulses to obtain the intended length of the write pulses. This solution has the drawback that the accuracy of the intervals of the pulse length is limited by the frequency of the master clock. Besides, the write speed is limited to *n* times maximum frequency of the bit clock.

It is, therefore, an object of the invention to propose a reliable and accurate method for write pulse generation with low hardware complexity, which overcomes the above mentioned drawbacks.

According to the invention, this object is achieved by a method for write pulse generation on the basis of a bit clock, including the steps of:
- dividing the bit clock by a factor *n*,
- multiplying the divided bit clock by a factor *n+x* or *n-x* with a phase-locked loop to obtain signal edges which are time-shifted relative to the bit clock,
- selecting a desired time-shifted signal edge, and
- multiplying the selected time-shifted signal edge by the factor *n* with a further phase-locked loop to obtain a time-shifted bit clock.
The principle of the invention is to generate a time-delayed bit clock with an attached PLL. In case of *x*=*1* the delay equals the *n*-th part of the bit clock period. Each period, the time delay increases by *n*. The desired delay is advantageously selected by a multiplexer. Thus, a defined time delay is issued representing the desired length of the write pulse with the accuracy of *n*. The invention can easily be applied to high speed drives, since no high frequency bit clock is needed. In addition, a defined accuracy depending on the time delay interval is achieved. The principle of the invention is not frequency dependent, but automatically adapts to the issued frequency.

Favourably, a plurality of different time-shifted bit clocks are generated by performing the steps of selecting a desired time-shifted signal edge and multiplying the selected time-shifted signal edge by the factor *n* with a further phase-locked loop several times in parallel. This allows to generate a well-defined optical output signal based on the bit clock, one or more of the time-shifted bit clocks and a signal representing the shape of a pit to be recorded.

Similarly, a circuit for write pulse generation on the basis of a bit clock includes:
- a divider for dividing the bit clock by a factor *n*,
- a phase-locked loop for multiplying the divided bit clock by a factor *n+x* or *n-x* to obtain signal edges which are time-shifted relative to the bit clock,
- a logic block for selecting a desired time-shifted signal edge, and
- a further phase-locked loop for multiplying the selected time-shifted signal edge by the factor *n* to obtain a time-shifted bit clock.

Such a circuit constitutes a low-complexity hardware implementation of the method according to the invention. Preferably, a plurality of logic blocks and further phase-locked loops are provided for obtaining a plurality of different time-shifted bit clocks, so that a well-defined optical output signal can be generated by a pulse-control logic based on the bit clock, one or more of the time-shifted bit clocks and a signal representing the shape of a pit to be recorded.

Advantageously, an apparatus for reading from and/or writing to optical recording media performs a method or includes a circuit according to the invention for write pulse generation. Such an apparatus allows to generate accurate write pulses with low hardware complexity.

For a better understanding of the invention, exemplary embodiments are specified in the following description with reference to the figures. It is understood that the invention is not limited to these exemplary embodiments and that specified features can also expediently be combined and/or modified without departing from the scope of the present invention. In the figures:
- Fig. 1: illustrates write pulses for recording on optical media;
- Fig. 2: shows a block diagram of a write pulse generation circuit according to the invention;
- Fig. 3: illustrates the principle of write pulse generation using phase-locked loops;
- Fig. 4: depicts a more detailed block diagram of a write pulse generation circuit according to the invention; and
- Fig. 5: shows the hardware realization of a decoder unit.

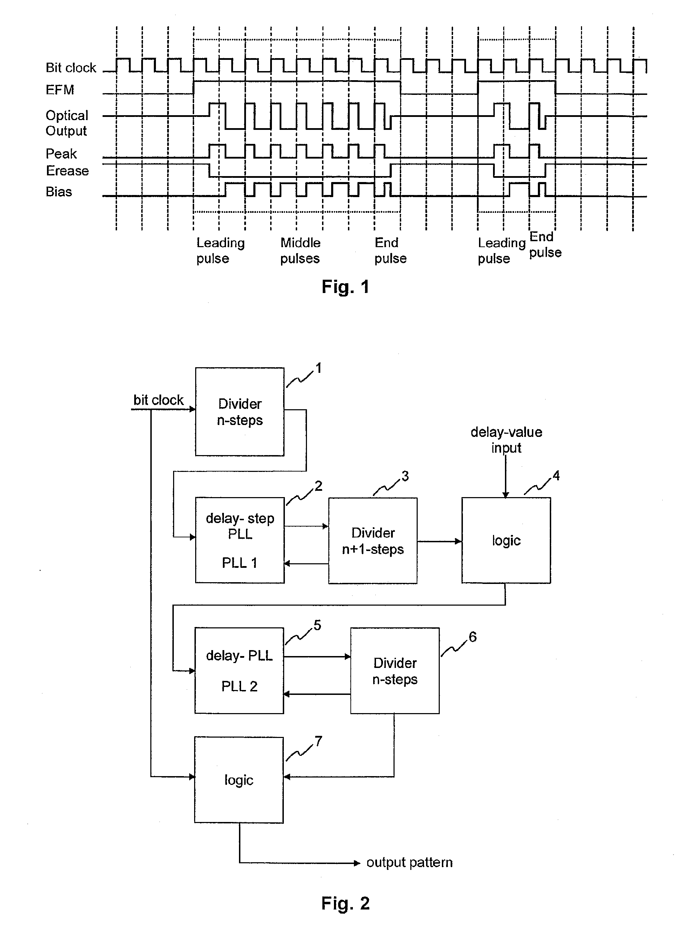

Fig. 1 illustrates the write pulses for recording on optical media. Shown are the signal patterns which are delivered from a write control unit to a laser control unit. The bit clock is used as a master clock for all units. EFM represents the global writing area. In Fig. 1 only an 8T pit and a 3T pit are indicated. While the optical output controls the laser power, peak, erase, and bias represent the different laser power levels.

In Fig. 2 a block diagram of a write pulse generation circuit according to the invention is shown. The laser is controlled using the bit clock and EFM signals. A pre-divider 1 divides the bit clock by *n*. The value of *n* determines the resolution of the time delay. A delay-step PLL 2, which includes a divider 3 having a division factor other than *n*, preferably *n*+*1* or *n*-*1*, multiplies the divided bit clock by the division factor of the divider 3. A logic block 4, which receives a delay selection signal, allows to select one of the *n* possible delays. A delay PLL 5 including a divider 6 to multiplies the output frequency of the delay-step PLL 2 by *n* to obtain the bit clock frequency again, but shifted with the selected delay relative to the original bit clock. A further logic block 7 finally generates a laser power output pattern. For each additional delay line a further set of delay PLL, divider and logic block is needed.

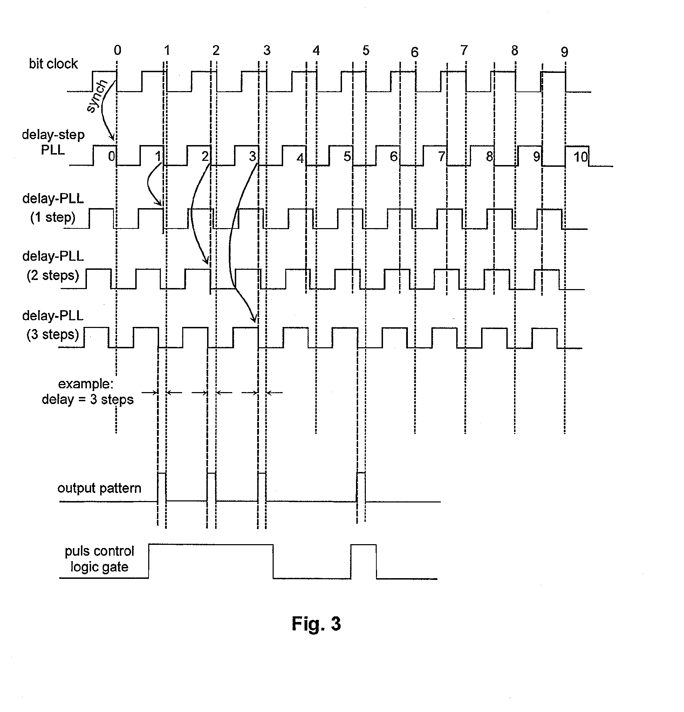

In Fig. 3 the principle of write pulse generation using phase-locked loops is illustrated by means of exemplary patterns of the bit clock, which is used as the master clock, and the output signals of the delay-step PLL 2 and the delay PLL 5. In the figure *n* is set to 20. The output signals of the delay PLL 5 are indicated for a one step delay, a two step delay, and a three step delay.

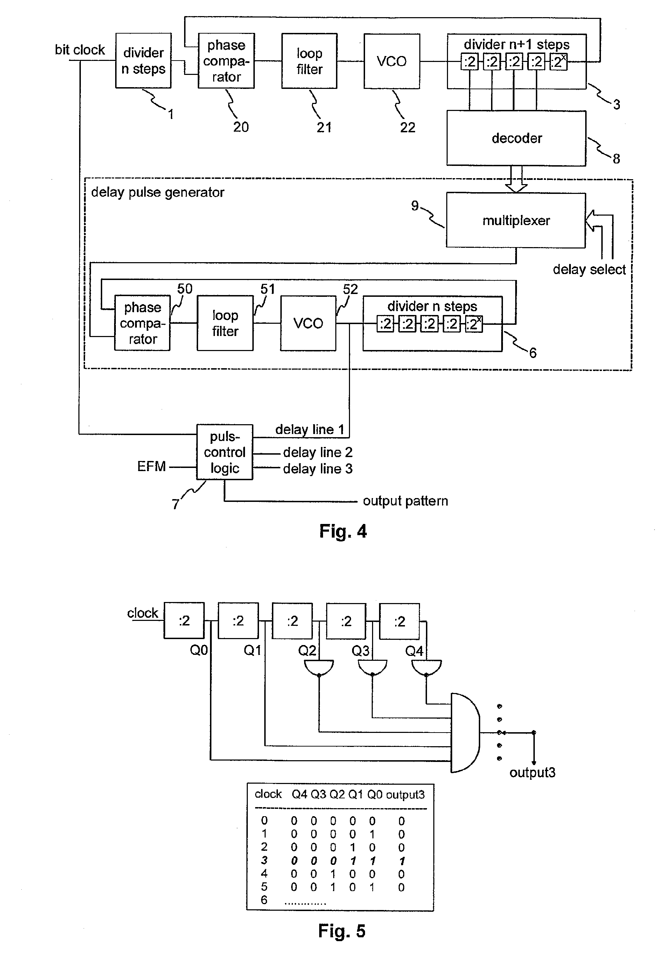

Fig. 4 depicts a more detailed block diagram of a write pulse generation circuit. The block diagram is similar to that of Fig. 2. Only the main functions are indicated. The input of the divider 1 is the bit clock. First this clock is divided by a factor of n. Subsequent to the divider 1, a PLL unit including a phase comparator 20, a loop filter 21, a voltage controlled oscillator (VCO) 22 and a further divider 3 is arranged. This PLL unit multiplies the bit clock frequency by a factor of n+x. It the easiest and most useful case x is defined as *+1* or -*1*. The algebraic sign defines either a positive or a negative delay against the bit clock. Due to the difference of e.g. x = 1 (for *n+1* or *n-1*) the output pattern of the VCO 22 is shifted by exactly one bit clock length within one period of the output signal of the divider 1. The value of *n* determines the resolution of the delay-steps. In the case of *n=32,* for example, the resolution of the delay unit is 1/32 of the length of the bit clock. In other words, the period of the bit clock is divided into n intermediate values.

The first edge of one period (cf. the pattern of the delay-step PLL in Fig. 3) is synchronous with the bit clock. The following edges are shifted in steps of 1/*n* of one period. A decoder 8, whose realization is depicted in more detail in Fig. 5, is used to obtain the single edges and, therefore, the different delays. The required delay is then selected using a multiplexer 9. The example of delay #3 is illustrated in Fig. 3 and also in Fig. 5. The period of this signal is equal to the period of the output signal of the divider 1, but time-shifted.

An additional PLL, which is also a frequency multiplier, is made up of a phase comparator 50, a loop filter 51, a VCO 52, and a divider 6 with n steps. Since the multiplication factor is n, the output frequency is equal to the bit clock, but all edges are shifted by *m*/*n* of the length of the bit clock, where *m* is an integer number. In the example in Fig. 3, *m* is set to 3. There is no frequency higher than the bit clock. The multiplexer 9 and the additional PLL form one delay pulse generator. For each additional delay line an additional delay pulse generator is necessary.

Following the frequency multiplier, a pulse-control logic 7 is provided. The input signals for this unit are the EFM signal, which represents the shape of the recording pit (cf. Fig. 1), the bit clock, and the delayed clock from the VCO 52. These signals are combined by the pulse-control logic 7, to generate the optical output signal as depicted in Fig. 1.

## Claims

1. Method for write pulse generation on the basis of a bit clock, including the steps of:
- dividing the bit clock by a factor *n*,
- multiplying the divided bit clock by a factor *n+x* or *n-x* with a phase-locked loop (2, 3) to obtain signal edges which are time-shifted relative to the bit clock,
- selecting a desired time-shifted signal edge, and
- multiplying the selected time-shifted signal edge by the factor n with a further phase-locked loop (5, 6) to obtain a time-shifted bit clock.

2. Method according to claim 1, **wherein** a plurality of different time-shifted bit clocks are generated by performing the steps of selecting a desired time-shifted signal edge and multiplying the selected time-shifted signal edge by the factor n with a further phase-locked loop (5, 6) several times in parallel.

3. Method according to claim 1 or 2, **wherein** a multiplexer (4) is used for selecting the desired time-shifted signal edge.

4. Method according to one of claims 1 to 3, **further** including the step of generating an optical output signal based on the bit clock, one or more time-shifted bit clocks and a signal representing the shape of a pit to be recorded.

5. Method according to one of claims 1 to 4, **wherein** *x=1.*

6. Circuit for write pulse generation on the basis of a bit clock, including:
- a divider (1) for dividing the bit clock by a factor *n*,
- a phase-locked loop (2, 3) for multiplying the divided bit clock by a factor *n+x* or *n-x* to obtain signal edges which are time-shifted relative to the bit clock,
- a logic block (4) for selecting a desired time-shifted signal edge, and
- a further phase-locked loop (5, 6) for multiplying the selected time-shifted signal edge by the factor n to obtain a time-shifted bit clock.

7. Circuit according to claim 6, **wherein** a plurality of logic blocks (4) and further phase-locked loops (5, 6) are provided for obtaining a plurality of different time-shifted bit clocks.

8. Circuit according to claim 7, **further** including a pulse-control logic (7) for generating an optical output signal based on the bit clock, one or more time-shifted bit clocks and a signal representing the shape of a pit to be recorded.

9. Apparatus for reading from and/or writing to optical recording media (1), **characterized in that** it performs a method according to one of claims 1 to 5 or includes a circuit according to one of claims 6 to 8 for write pulse generation.
